# EUROPEAN PATENT APPLICATION

(11) **EP 4 772 971 A1**
(43) Date of publication of application: **08.07.2026**
(21) Application number: 25208512.1
(22) Date of filing: 14.10.2025
(51) Int. Cl.: G06F 3/01

(54) **DISPLAY OPERATING DEVICE**

(30) Priority: 03.01.2025 KR 20250001095
(71) Applicant: Hyundai Mobis Co., Ltd., Gangnam-gu Seoul 06141 (KR)
(72) Inventor: LEE, Shin Jik, 16891 Yongin-si, Gyeonggi-do (KR); AHN, Sung Joon, 16891 Yongin-si, Gyeonggi-do (KR); AN, Hyun Jun, 16891 Yongin-si, Gyeonggi-do (KR); LEE, Jun, 16891 Yongin-si, Gyeonggi-do (KR); KIM, Kyung Hoon, 16891 Yongin-si, Gyeonggi-do (KR)
(74) Representative: Jung, Minkyu

(57) **Abstract**

A display operating device and a system therefor are provided. The display operating device includes a button plate (100) including a portion that is transparent and configured to be pressed by a user, a touch film attached to a lower surface of the button plate and configured to detect a touch thereon and generate a touch signal, a haptic module (200) to receive a detection signal in response to the touch signal being detected by the touch film and generate a haptic vibration at the button plate, and a swing module (300) to support one or more sides of the button plate and transmit the haptic vibration to the button plate.

## Description

### CROSS-REFERENCE TO RELATED APPLICATION

This application claims priority to and the benefit under 35 USC § 119(a) of Korean Patent Application No. 10-2025-0001095, filed on January 3, 2025, in the Korean Intellectual Property Office, the disclosure of which is incorporated herein by reference in its entirety for all purposes.

### BACKGROUND

### 1. Field

The present invention relates to a display operating device, and more particularly, to a display operating device implemented to enable physical operation of a display mounted in a vehicle.

### 2. Description of the Related Art

Recently, various displays have been provided in the interiors of vehicles, and particularly, vehicle information guidance displays (center information displays: CIDs) gradually have become larger because the vehicle information guidance displays provide drivers with various functions such as navigation, media, radio, and air conditioning control. Additionally, as these displays become larger, a method of operating the displays is gradually changing from physical button methods to touch methods.

However, the touch methods had the problem that it was more difficult to operate while driving than the existing physical button method, and particularly, it was difficult to input accurate information. Therefore, it is necessary to develop display operating devices with a structure that can complement the shortcomings of the touch method by allowing physical operation even while driving.

### SUMMARY

One embodiment of the present invention is directed to providing an operating device for a display capable of operating a graphical user interface (GUI) of a touch display while driving through a touch film provided on a lower surface of a button plate, and capable of operating the graphical user interface through a physical operation of pressing the button plate while driving.

In addition, according to one embodiment of the present invention, since a haptic vibration is generated using a haptic module when a button plate is physically operated, a display operating device that can enhance a user's usability is provided.

The task to be solved by the present invention is not limited to the task described above, and other tasks not described herein will be clearly understood by those skilled in the art from the description below.

In a general aspect, a display operating device includes: a button plate including a portion that is transparent and configured to be pressed by a user; a touch film attached to a lower surface of the button plate and configured to detect a touch thereon and generate a touch signal; a haptic module configured to receive a detection signal in response to the touch signal being detected by the touch film, and generate a haptic vibration at the button plate; and a swing module configured to support one or more sides of the button plate and transmit the haptic vibration to the button plate.

The swing module may include a swing body which supports both sides of the button plate and on which the haptic module is mounted, and a support body that rotatably supports one side of the swing body.

The support body may include one or more hinge portions configured to rotatably support at least one of the one or more sides of the swing body, wherein the swing body may be mounted on the hinge portion and configured to vibrate in a direction perpendicular to a rotational direction of the swing body.

The one or more hinge portions may include a pair of hinge portions, and a hinge connecting portion connected to one side of the swing body may be provided between the pair of hinge portions, wherein the hinge connecting portion may be installed while having a gap between the pair of hinge portions.

The swing body may include an extension portion that supports one side of the button plate and extends in a direction perpendicular to an extension direction of the button plate.

The extension portion may include a portion that is bent upward.

The support body may be connected to the extension portion and configured to rotatably support the swing body.

The display operating device may further include a flexible printed circuit board (FPCB) connected to an end portion of the touch film, wherein the FPCB is electrically connected to a first board, and wherein the first board is configured to transmit the touch signal to a controller.

The display operating device may further include a switching module disposed on a lower side of the swing module, wherein the switching module may include a second board, a switch electrically connected to the second board, and a plunger configured to, in response to the button plate being pressed, press the switch in conjunction therewith.

The plunger may be installed by passing through the support body, exposed to an outside of the support body, and pressed by a lower surface of the swing body.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a perspective view showing a display operating device according to one embodiment of the present invention;
FIG. 2 is a side view exemplarily showing the display operating device according to one embodiment of the present invention mounted on a display;
FIG. 3 is an enlarged perspective view of a main part of the display operating device according to one embodiment of the present invention;
FIG. 4 is a longitudinal cross-sectional view of the main part shown in FIG. 3;
FIG. 5 is a view showing an FPCB of the display operating device according to one embodiment of the present invention connected to a board;
FIG. 6 is a view showing a state before operation of the display operating device according to one embodiment of the present invention;
FIG. 7 is a drawing showing a state in which a user presses a button plate with his/her finger in the state shown in FIG. 6;
FIG. 8 is a view showing a portion of a haptic module that vibrates according to one embodiment of the present invention; and
FIG. 9 is a view showing a vibration transmitted according to the operation of the display operating device according to one embodiment of the present invention.

### DETAILED DESCRIPTION

The present invention may be modified in various ways and has various embodiments, and specific embodiments are illustrated in the drawings and will be described in detail. However, this is not intended to limit the present invention to any particular embodiment, and is to be understood to include all modifications, equivalents, or substitutions that fall within the scope of the ideas and techniques of the present invention. In describing the present invention, when it is determined that a detailed description of a related known technology may obscure the gist of the present invention, the detailed description thereof is omitted.

Although the terms first, second, and the like may be used to describe various components, the above components need not to be limited by the above terms. The above terms are used solely to distinguish one component from another.

The terminology used in the present application is used only to describe particular embodiments and is not intended to limit the present invention. Singular expressions include plural expressions unless the context clearly indicates otherwise. In the present application, it should be understood that terms such as "includes" or "has" are intended to specify the presence of a feature, number, step, operation, component, part or combination thereof described in the specification, but do not exclude in advance the possibility of the presence or addition of one or more other features, numbers, steps, operations, components, parts or combinations thereof.

Also, throughout the specification, when "connected" is described, this does not only mean that two or more components are directly connected, but also that two or more components are indirectly connected through other components, that they are electrically connected as well as physically connected, or that they are referred to by different names depending on location or function but are one.

Additionally, when one component is described as being formed or disposed "above (upper) or below (lower)" another component, above (upper) or below (lower) includes not only cases where the two components are in direct contact with each other, but also cases where one or more still other components are formed or disposed between the two components. Additionally, when expressed as "above (upper) or below (lower)," it may include the meaning of not only the upward direction but also the downward direction based on one component.

Hereinafter, one embodiment of a display operating device according to the present invention will be described in detail with reference to the attached drawings. When describing with reference to the attached drawings, identical or corresponding components are denoted by the same drawing numbers and redundant descriptions thereof are omitted.

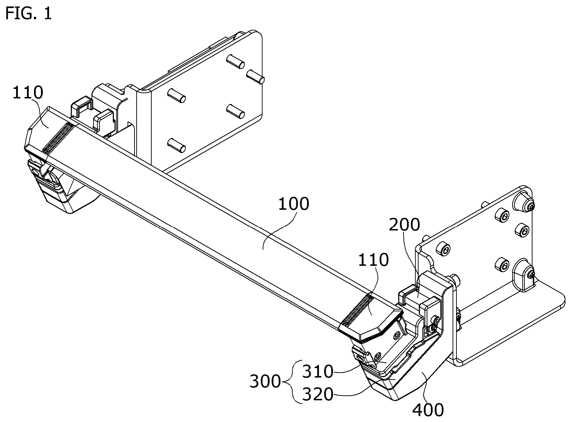

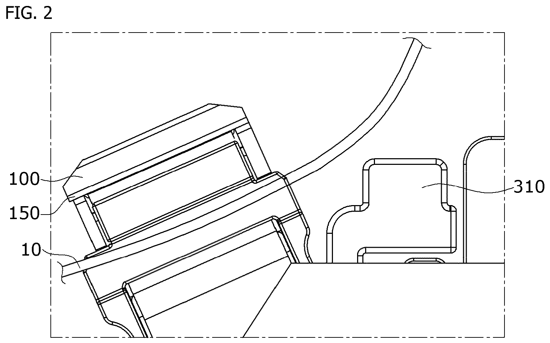

FIG. 1 is a perspective view showing a display operating device according to one embodiment of the present invention, and FIG. 2 is a side view exemplarily showing the display operating device according to one embodiment of the present invention mounted on a display.

Here, as shown in the drawings, the display operating device according to one embodiment of the present invention may include a button plate 100, at least a portion of which is formed to be transparent and which is installed to be pressed by a user's pressing operation, a touch film 150 which is attached to a lower surface of the button plate 100 to detect a touch, a haptic module 200 which receives a detection signal when a touch signal is detected by the touch film 150 and generates a haptic vibration to the button plate 100, and a swing module 300 which supports both sides of the button plate 100, is provided with the haptic module 200, and transmits the vibration of the haptic module 200 to the button plate 100.

The button plate 100 may be in the form of a long plate in a left-right direction, but is not limited thereto, and the button plate 100 may also be in the form of a long plate in an up-down direction. At least a portion of the button plate 100 may be formed to be transparent. This is for looking at the buttons displayed on a display 10 disposed on a lower portion of the button plate 100. The user may check the positions of the buttons through the transparently formed portion of the button plate 100, and when pressing the corresponding button plate 100, cause a touch signal to be transmitted through the touch film 150. The button plate 100 may be manufactured from a tempered glass material.

In this embodiment, the display 10 may be a flexible display as shown in FIG. 2. The flexible display is a display that can be bent so that at least a portion thereof has a curved surface. In one embodiment, the flexible display may be movably installed in a center fascia portion of a vehicle. In one embodiment, the flexible display is a center information display (CID) that integrates audio, video, and navigation system (AVN) and air conditioning system (HVAC) operations into one, and the flexible display may have the role of an AVN with the high picture quality of an OLED and also implement an HVAC operating system angle that takes into account a driver's convenience through the bending of the flexible display. Particularly, in the case of an AVN region, the immersion of a passenger is increased while reducing the glare of the windshield by applying a concave shape. Additionally, since the flexible display may move up and down to change its height, the screen position can be adjusted to suit the needs of the passenger.

Support frames 110 may be provided on both sides of the button plate 100, and the button plate 100 may be disposed on an upper portion of the display 10 through the support frames 110. In this state, the lower surface of the button plate 100 may be spaced a predetermined distance apart from the display 10, and a graphical user interface (GUI) of the touch display 10 may be operated while driving through the touch film 150 provided on the lower surface of the button plate 100, and the graphical user interface may be operated through a physical operation of pressing the button plate 100 while driving.

In this embodiment, since physical operation is possible while driving the vehicle without direct touch operation through the button plate 100, errors due to a touch operation may be prevented. In addition, when the button plate 100 is pressed, since a touch signal may be transmitted through the touch film 150 and haptic feedback is transmitted by the haptic module 200, the user may feel a vibration, thereby increasing usability.

The touch film 150 provided on the lower surface of the button plate 100 may detect the user's touch operation, cause an input signal of the corresponding button to be transmitted, and cause a detection signal to be transmitted to the haptic module 200 so that a vibration is transmitted to the button plate 100.

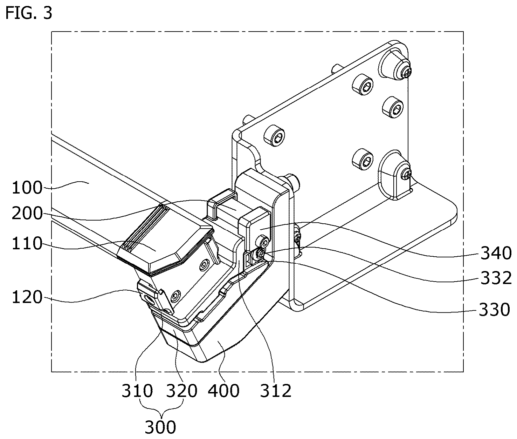

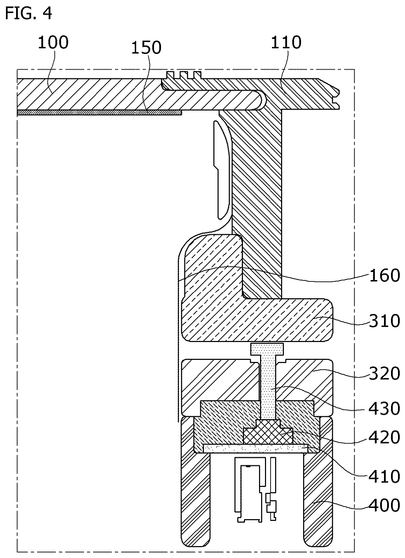

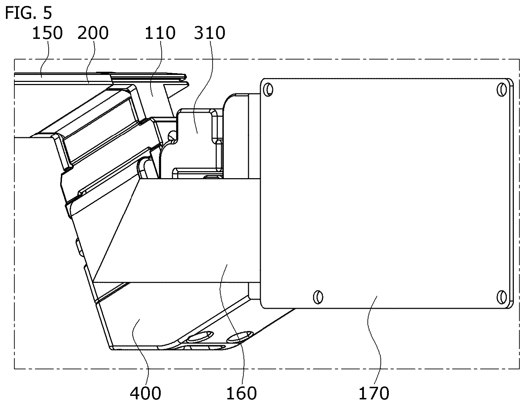

FIG. 3 is an enlarged perspective view of a main part of the display operating device according to one embodiment of the present invention, FIG. 4 is a longitudinal cross-sectional view of the main part shown in FIG. 3, and FIG. 5 is a view showing an FPCB of the display operating device according to one embodiment of the present invention connected to a board.

Referring to FIGS. 3 to 5, both sides of the button plate 100 may be formed to have a relatively thin thickness, and both sides thereof may be inserted into and supported by the support frames 110. The support frame 110 is a portion for mounting the button plate 100 to the display 10 side, and fastening pieces 120 that are directly fastened to the display 10 may be coupled to front and rear ends of the support frame 110.

Further, a flexible printed circuit board (FPCB) 160 for transmitting an electrical signal may be connected to both sides of the touch film 150, and the FPCB 160 may be connected to a first board 170. A touch signal transmitted through the touch film 150 and the FPCB 160 may be transmitted to the first board 170, and the first board 170 may receive the touch signal as an input and transmit the touch signal to a controller so that an operation according to a touch button is performed.

The haptic module 200 may detect a touch signal through the operation of the button plate 100 and transmit haptic feedback corresponding to the touch signal through the button plate 100. In one embodiment, when the user presses one side of the button plate 100, the haptic module 200 may provide haptic feedback corresponding to the pressing. In addition, in one embodiment, the haptic module 200 may provide haptic feedback for a gesture in which the user drags while touching the button plate 100.

The haptic module 200 may be mounted on a swing body 310 of the swing module 300 described below to provide a haptic vibration. In one embodiment, one side of the haptic module 200 may be electrically connected to the controller through a wire, and may receive a touch signal input to the controller and generate a haptic vibration. When the haptic module 200 generates the haptic vibration, the swing module 300 on which the haptic module 200 is mounted also may vibrate and transmit the vibration to the button plate 100.

The swing module 300 may include the swing body 310 which supports both sides of the button plate 100 and on which the haptic module 200 is mounted, and a support body 320 that rotatably supports one side of the swing body 310.

The swing body 310 may be formed to have a structure that supports both sides of the button plate 100. In one embodiment, the swing body 310 may be formed to have an extension portion 312 that extends in a direction perpendicular to an extension direction of the button plate 100 while supporting the bottom of the support frame 110. The extension portion 312 may be formed by bending at least a portion thereof upward. The extension portion 312 may have a structure protruding from one side of the swing body 310 that supports both sides of the button plate 100.

The support body 320 may rotatably support the extension portion 312 protruding outward from the swing body 310 that supports both sides of the button plate 100. For this purpose, a hinge portion 330 may be provided on the support body 320 to protrude from an upper surface of the support body 320. A hinge hole 334 may be formed in the hinge portion 330, and a hinge shaft 332 may pass through the hinge hole 334 to rotatably support the swing body 310. The swing body 310 may be mounted on the hinge portion 330 so as to vibrate in a direction perpendicular to a rotational direction of the swing body 310.

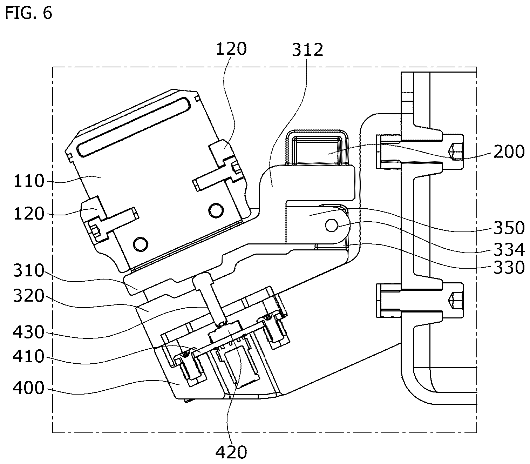

In one embodiment, a pair of hinge portions 330 may be provided, and a hinge connecting portion 350 (see FIG. 6) connected to one side of the swing body 310 may be provided between the pair of hinge portions 330. The hinge connecting portion 350 may be installed so as to have a gap between the pair of hinge portions 330. That is, the hinge connecting portion 350 may vibrate in an axial direction because the hinge connecting portion 350 has the gap while rotating between the hinge portions 330. The hinge connecting portion 350 may be connected to one side of the swing body 310 as described above, but is not limited thereto, and the swing body 310 may be rotatably connected directly to the hinge portion 330 without the hinge connecting portion 350.

In this way, the swing body 310 rotatably supported on the support body 320 may not be pressed by the pressure when the button plate 100 is pressed, but may rotate around the hinge portion 330. That is, the swing body 310 may rotate while descending when the button plate 100 is pressed. This is possible because the center of rotation of the swing body 310 is not located in the direction of both sides of the button plate 100, but is disposed at a position spaced apart in a vertical direction from both sides of the button plate 100.

That is, referring to FIG. 3, since the center of rotation of the swing body 310 is located at a portion spaced rearward from one end of the button plate 100 (the extension portion 312 side is rotatably connected), when the button plate 100 is pressed, the swing body 310 may rotate in conjunction therewith. The rotational motion of the swing body 310 described above is a swing type button structure, and may prevent double clicking when operating the button plate 100.

In this embodiment, the haptic module 200 may be mounted on the swing body 310. More specifically, the haptic module 200 may be mounted on the extension portion 312 of the swing body 310. A space in which the haptic module 200 is mounted may be formed in the extension portion 312, and a support member 340 may be coupled in a state in which the haptic module 200 is seated, thereby preventing the haptic module 200 from being detached. A fastening tool 342 may be fastened to the support member 340 so that the support member 340 is coupled to the extension portion 312. Meanwhile, in the swing body 310 on which the haptic module 200 is mounted, foam pads (not shown) may be provided on both sides of the haptic module 200 so that a haptic vibration is transmitted without noise.

Meanwhile, a switching module 400 may be disposed on a lower side of the haptic module 200. The switching module 400 may include a second board 410, a switch 420 that is electrically connected to the second board 410, and a plunger 430 that, when the bottom plate 100 is pressed, presses the switch 420 in conjunction therewith. Various switches such as a tact switch may be used as the switch 420.

The switching module 400 may be installed in a housing disposed on the lower side of the haptic module 200. The plunger 430 may be installed by passing through the support body 320, and the upper end thereof may be exposed to the outside by passing through the support body 320, and the exposed upper end may be pressed by the lower surface of the swing body 310 that, when the button plate 100 is pressed, rotates in conjunction therewith. The plunger 430 pressed in this manner may press the switch 420, and the second board 410 may transmit a signal to the controller, and the controller may transmit the signal to the haptic module 200 to generate a haptic vibration.

Meanwhile, although the switching module 400 is described as being configured separately from the haptic module 200 in the above description, when the switching module 400 is disposed inside the support body 320, the switching module 400 may be configured together with the haptic module 200. In one embodiment, the switching module 400 may be disposed inside the support body 320 of the haptic module 200 to perform a switching operation.

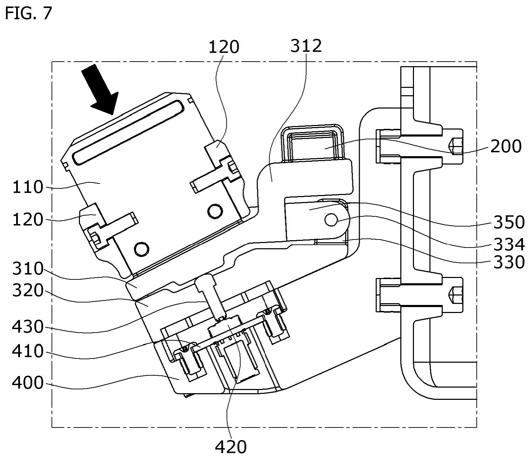

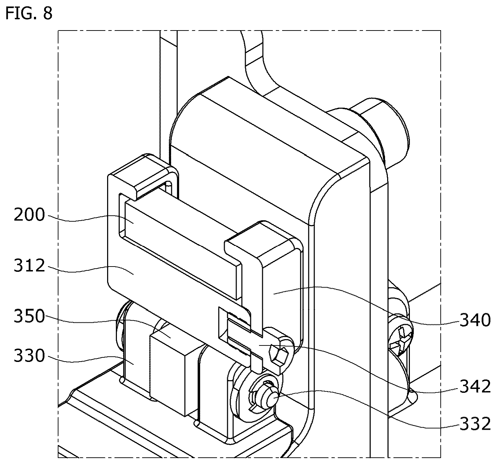

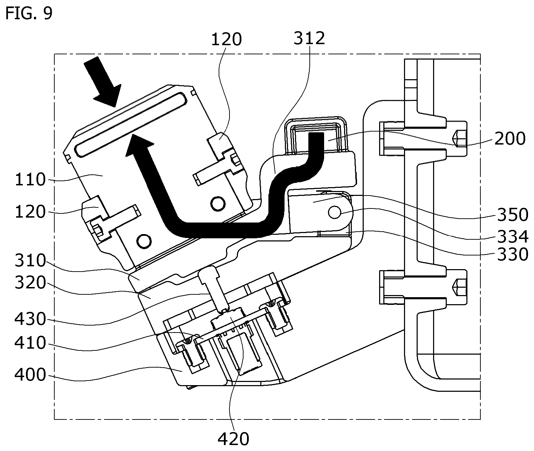

FIG. 6 is a view showing a state before operation of the display operating device according to one embodiment of the present invention, FIG. 7 is a drawing showing a state in which the user presses the button plate with his/her finger in the state shown in FIG. 6, FIG. 8 is a view showing a portion of the haptic module that vibrates according to one embodiment of the present invention, and FIG. 9 is a view showing a vibration transmitted according to the operation of the display operating device according to one embodiment of the present invention.

Referring to FIG. 6, in the state before the operation of the display operating device, the swing body 310 of the haptic module 200 may maintain a state of supporting both sides of the button plate 100 as shown in the drawing, and the top of the plunger 430 disposed on an upper side of the switch 420 may not be pressed by the swing body 310 and may be spaced apart from the lower surface of the swing body 310.

In this state, when the user presses the button plate 100 as in FIG. 7, a touch signal may be transmitted to the first board 170 through the FPCB 160, and the first board 170 may transmit the touch signal to the controller so that the operation according to the touch button is performed. Additionally, when the button plate 100 is pressed, the swing body 310 may descend while rotating in conjunction therewith. In this case, the lower surface of the swing body 310 may press the plunger 430, and the plunger 430 may press the switch 420 to transmit the touch signal to the second substrate 410. Then, the touch signal is transmitted from the second board 410 to the controller to operate the haptic module 200.

Referring to FIG. 8, when the touch signal is transmitted to the haptic module 200 and the operation is performed, the haptic module 200 vibrates in the left-right direction. Then, the swing body 310 on which the haptic module 200 is mounted may also vibrate, and this may be transmitted to the button plate 100. When the swing body 310 vibrates in a transverse direction as in FIG. 8, the haptic feedback transmission power to the button plate 100 can be improved.

Referring to FIG. 9, the vibration of the haptic module 200 may be directly transmitted to the button plate 100 in the direction of the arrow through the swing body 310, and the user who presses the button plate 100 may sense haptic feedback.

According to one embodiment of the present invention, a graphical user interface (GUI) of a touch display can be operated while driving through a touch film provided on a lower surface of a button plate, and the graphical user interface can be operated through a physical operation of pressing the button plate while driving.

In addition, according to one embodiment of the present invention, since a haptic vibration is generated using a haptic module when the button plate is physically operated, the user's usability can be increased.

Although the present invention has been described above with reference to specific embodiments thereof, it will be understood by those skilled in the art that various modifications and changes may be made to the present invention without departing from the spirit and scope of the present invention as set forth in the claims below.

## Claims

1. A display operating device comprising:
a button plate including a portion that is transparent and configured to be pressed by a user;
a touch film attached to a lower surface of the button plate and configured to detect a touch thereon and generate a touch signal;
a haptic module configured to:
receive a detection signal in response to the touch signal being detected by the touch film; and
generate a haptic vibration at the button plate; and
a swing module configured to:
support one or more sides of the button plate; and
transmit the haptic vibration to the button plate.

2. The display operating device of claim 1, wherein the swing module includes:
a swing body which supports both sides of the button plate and on which the haptic module is mounted; and
a support body that rotatably supports one side of the swing body.

3. The display operating device of claim 2, wherein the support body includes one or more hinge portions configured to rotatably support at least one of the one or more sides of the swing body, and
wherein the swing body is mounted on the hinge portion and configured to vibrate in a direction perpendicular to a rotational direction of the swing body.

4. The display operating device of claim 3, wherein the one or more hinge portions comprise a pair of hinge portions, and a hinge connecting portion connected to one side of the swing body is provided between the pair of hinge portions, and
wherein the hinge connecting portion is installed while having a gap between the pair of hinge portions.

5. The display operating device of any one of claims 2 to 4, wherein the swing body includes an extension portion that supports one side of the button plate and extends in a direction perpendicular to an extension direction of the button plate.

6. The display operating device of claim 5, wherein the extension portion includes a portion that is bent upward.

7. The display operating device of claim 5 or 6, wherein the support body is connected to the extension portion and configured to rotatably support the swing body.

8. The display operating device of any one of claims 1 to 7, further comprising:
a flexible printed circuit board (FPCB) connected to an end portion of the touch film,
wherein the FPCB is electrically connected to a first board, and
wherein the first board is configured to transmit the touch signal to a controller.

9. The display operating device of any one of claims 2 to 8, further comprising:
a switching module disposed on a lower side of the swing module,
wherein the switching module includes:
a second board;
a switch electrically connected to the second board; and
a plunger configured to, in response to the button plate being pressed, press the switch in conjunction therewith.

10. The display operating device of claim 9, wherein the plunger is installed by passing through the support body, exposed to an outside of the support body, and pressed by a lower surface of the swing body.
